# EUROPÄISCHE PATENTSCHRIFT

(11) **EP 3 312 054 B1**
(45) Veröffentlichungstag und Bekanntmachung des Hinweises auf die Patenterteilung: **09.09.2020**
(21) Anmeldenummer: 17186216.2
(22) Anmeldetag: 14.08.2017
(51) Int. Cl.: B60R 15/02, A47K 3/28, E04H 1/12

(54) **TRAILER MIT DUSCHKABINEN**
TRAILER WITH SHOWER CUBICLES
REMORQUE AVEC DES CABINES DE DOUCHE

(30) Priorität: 19.10.2016 DE 202016105859 U
(43) Veröffentlichungstag der Anmeldung: 25.04.2018
(73) Patentinhaber: Weiß, Erhard, 36323 Grebenau (DE)
(72) Erfinder: Weiß, Erhard, 36323 Grebenau (DE)
(74) Vertreter: Kloiber, Thomas

(56) Entgegenhaltungen:
- CN-U- 201 525 318
- DE-U1-202008 013 236
- US-A1- 2014 259 971

## Beschreibung

Die Erfindung betrifft einen Trailer mit Duschkabinen, wobei der Trailer ein Anhänger für ein Kraftfahrzeug oder ein Auflieger sein kann.

Ein Trailer mit Duschkabinen ist aus der DE 20 2014 101 867 U1 bekannt. Hierbei handelt es sich um eine mobile Tanknotdusche, die auf einem Kraftfahrzeuganhänger montiert ist. Die Tanknotdusche ist insbesondere für verunfallte Personen vorgesehen, die beispielsweise Verätzungen oder Verbrennungen erlitten haben und mit einem starken Wasserstrahl abzuduschen sind. Die bekannte Tanknotdusche ist für Großveranstaltungen unter freiem Himmel, bei denen eine Vielzahl von Personen in kürzester Zeit duschen wollen, nicht geeignet.

Eine mobile Duschvorrichtung mit einer Vielzahl von Duschkabinen, die beispielsweise bei Großveranstaltungen eingesetzt werden kann, ist aus der DE 20 2005 012 413 U1 bekannt. Die bekannte Duschvorrichtung ist zusammenklappbar ausgestaltet, so dass sie in einem Container transportiert und vor Ort aufgebaut werden kann. Zum Schutz gegen Witterungseinflüsse wird die bekannte Duschvorrichtung in einem Zelt untergebracht. Der für den Aufbau der Durchvorrichtung und des Zeltes erforderliche Aufwand ist nachteilig. Die US 2014/259971 A1 offenbart einen Trailer mit Duschkabinen gemäß dem Oberbegriff des Anspruchs 1.

Aufgabe der vorliegenden Erfindung ist es, einen Trailer mit Duschkabinen anzugeben, der eine möglichst große Zahl von Duschkabinen auf der zur Verfügung stehenden Fläche aufweist.

Die Aufgabe ist mit einem Trailer gemäß dem Anspruch 1 gelöst.

Die erfindungsgemäße Lösung sieht vor, dass zwei in Fahrtrichtung des Trailers ausgerichtete Reihen von Duschkabinen aneinander angrenzend angeordnet sind und dass für jede Duschkabine ein Zugang von einer Außenseite des Trailers vorhanden ist. Durch den Zugang der Duschkabinen von außen kann die gesamte zur Verfügung stehende Fläche des Trailers für die Duschkabinen selbst genutzt werden, ohne dass Teilflächen für Gänge als Zugang zu den Duschkabinen erforderlich wären. Es werden praktisch die gesamten in Fahrtrichtung des Trailers rechts und links angeordneten Außenseiten für Zugänge zu den Duschkabinen benutzt. Mit Vorteil brauchen die Duschkabinen nicht aus einem Container herausgenommen und aufgebaut zu werden. Der erfindungsgemäße Trailer muss nur an den Einsatzort gebracht werden und ist sofort einsatzbereit.

In Ausgestaltung der Erfindung ist der Trailer an seinen Außenseiten mit ein oder zwei ausklappbaren Treppenstufen versehen. Diese dienen zur Überwindung des Höhenunterschieds zwischen dem Erdboden und dem Boden der Duschkabinen. Die Treppenstufen sind zum Transport des Trailers einklappbar, so dass die für Trailer im Straßenverkehr maximal zulässige Breite nicht überschritten wird. Die zulässige Breite des Trailers kann daher im vollen Umfang für die Anordnung der Duschkabinen verwendet werden.

In einer vorteilhaften Ausführungsform der Erfindung ist der Trailer für den Duschbetrieb absenkbar. Durch diese Maßnahme ist der Höhenunterschied zwischen dem Erdboden und dem Boden der Duschkabinen leichter überwindbar. Gegebenenfalls kann eine Treppenstufe eingespart werden.

Um den Trailer beim Transport sicher zu verschließen und insbesondere den Luftwiderstand zu verringern dient eine erfindungsgemäße Maßnahme, wonach der Trailer an seinen Außenseiten Klappen zum Verschließen der Außenseiten aufweist, die im aufgeklappten Zustand jeweils ein Vordach bilden. Ein weiterer Vorteil des Vordaches besteht darin, dass der Bereich vor den Zugängen zu den Duschkabinen wettergeschützt ist und beispielsweise als Umkleidebereich verwendet werden kann. Bei der Verwendung als Umkleide ist es zweckmäßig, um den Trailer und den Umkleidebereich herum eine Plane oder einen Zaun vorzusehen.

Die Erfindung wird noch verbessert durch die Maßnahme, dass alle Wasserinstallationen wie Frischwasserleitungen und Ablaufrinne in der Mitte des Trailers angeordnet sind. Dies ist deshalb besonders vorteilhaft, weil alle Duschkabinen an die Mitte des Trailers angrenzen. Bringt man die Duschköpfe und Armaturen auf dieser Innenseite der Duschkabinen an, so können die Duschköpfe und Armaturen mit denkbar kürzesten Rohren an eine in der Mitte des Trailers angeordnete Frischwasserleitung angeschlossen werden. Entsprechendes gilt für eine in der Mitte des Trailers angeordnete Ablaufrinne.

Für die Warmwasserversorgung ist vorzugsweise eine Ölheizung mit etwa 250 kW Heizleistung vorgesehen, die außerhalb des Trailers auf einem gesonderten Trailer oder im erfindungsgemäßen Trailer selbst angeordnet sein kann. Die Wasserversorgung kann über ein an das kommunale Wasserversorgungnetz angeschlossene Leitung oder aus einem Wassertank erfolgen.

Je nach Einsatzzweck des erfindungsgemäßen Trailers werden zwei vorteilhafte Ausführungsformen vorgeschlagen, wonach der Trailer bei einer Gesamtlänge von etwa 5 m zweimal sechs Duschkabinen oder bei einer Gesamtlänge von etwa 10 m zweimal zwölf Duschkabinen aufweist. Die letztgenannte Ausführungsform ist besonders für Großveranstaltungen geeignet, denn in den 24 Duschkabinen können pro Stunde zwischen 100 bis 200 Menschen eine Dusche nehmen.

In Weiterbildung der Erfindung ist vorgesehen, dass die Duschkabinen aus Rohren bestehen, von denen Wände zu Abgrenzung der Duschkabinen gehalten werden. Diese Ausführungsform ist besonders leicht. Die Erfindung umfasst Ausführungsformen, bei denen die Wände beispielsweise aus Holz, Metall oder Kunststoff bestehen.

Vorzugsweise besteht der Boden der Duschkabinen aus geriffeltem Aluminiumblech. Dieses Material ist leicht, korrosionsbeständig und durch die Riffelung rutschfest.

Ein Ausführungsbeispiel der Erfindung wird nachfolgend anhand der Zeichnungen näher erläutert. Die Figuren zeigen im Einzelnen:
- Figur 1:: eine perspektivische Ansicht eines erfindungsgemäßen Trailers mit Duschkabinen im aufgeklappten betriebsfertigen Zustand;
- Figur 2:: eine Seitenansicht des Trailers von Figur 1;
- Figur 3:: eine Draufsicht auf die Rückseite des Trailers von Figur 1;
- Figur 4:: eine Draufsicht auf die Vorderseite des Trailers von Figur 1;
- Figur 5:: eine gemäß Linie A-A aus Figur 2 geschnittene Ansicht des erfindungsgemäßen Trailers von oben.

Ein erfindungsgemäßer Trailer 1 ist bezüglich einer in Fahrtrichtung 4 ausgerichteten vertikalen Ebene im Wesentlichen symmetrisch aufgebaut. Er besitzt eine in Fahrtrichtung 4 gesehene rechte Reihe 5 mit sechs hintereinander angeordneten Duschkabinen 2 und eine in Fahrtrichtung 4 gesehene linke Reihe 6 mit ebenfalls sechs Duschkabinen 3, die in Fahrtrichtung 4 jeweils hintereinander angeordnet sind. Die Duschkabinen 2 grenzen mit ihren in Fahrtrichtung 4 ausgerichteten Innenwänden 22 an die Duschkabinen 3, Auf diese Weise wird fast die gesamte Grundfläche des Trailers 1 von Duschkabinen 2, 3 ausgefüllt. Die rechten Duschkabinen 2 haben jeweils einen rechten Zugang 7 von der rechten Außenseite 9 des Trailers 1 und die linken Duschkabinen 3 einen linken Zugang 8 von der linken Außenseite 10 des Trailers 1 . Dadurch ist jede Duschkabine 2, 3 von außen zugänglich und der erfindungsgemäße Trailer 1 benötigt keine inneren Zugänge zu den Duschkabinen 2, 3, was den Vorteil hat, dass auf der Grundfläche des Trailers 1 mehr Duschkabinen 2, 3 untergebracht werden können, als bei anderen Duschtrailern, die mit inneren Zugängen zu den Duschkabine versehen sind.

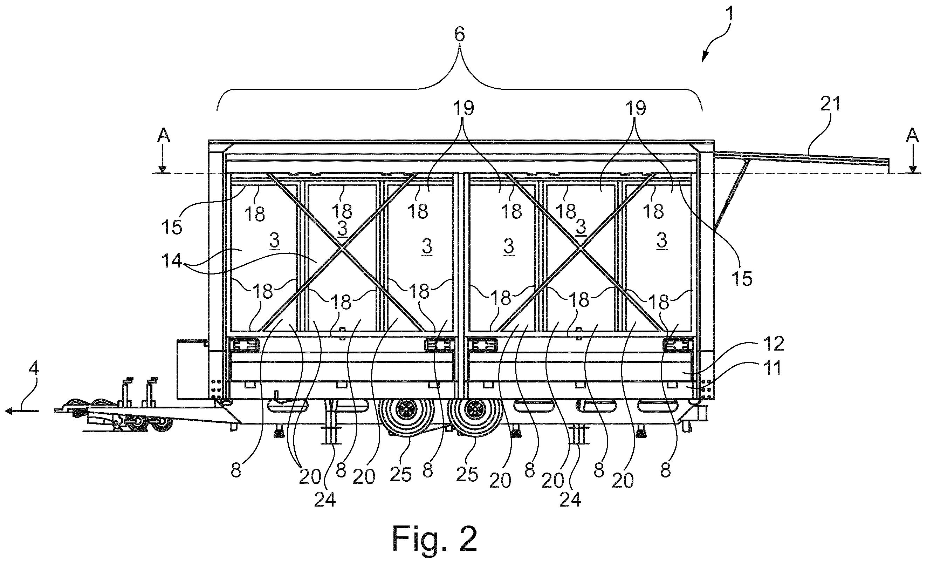

Die Böden 20 der Duschkabinen 2, 3 befinden sich deutlich über dem Niveau des Untergrundes, auf dem der Trailer 1 abgestellt ist. Um den Personen die Benutzung der Duschen zu erleichtern, sind jeweils zwei Treppenstufen 11, 12 vorgesehen, die im betriebsbereiten Zustand unterhalb der jeweiligen Zugänge 7, 8 des Trailers 1 angeordnet sind und sich in Fahrtrichtung 4 über den gesamten Bereich der Zugänge 7, 8 erstrecken. Für den Transport des Trailers 1 sind die Treppenstufen 11, 12 zusammenklappbar, um die Breite des fahrbereiten Trailers 1 zu verringern. Den zusammengeklappten Zustand erkennt man am Besten in Figur 2. Die übrigen Figuren zeigen ausgeklappte Treppenstufen 11, 12 auf der rechten Seite des Trailers 1 und zusammengeklappte Treppenstufen 11, 12 auf der jeweils linken Seite des Trailers 1.

Im Betrieb steht der Trailer 1 auf Stützen 24, die einen sicheren Stand des Trailers 1 im Duschbetrieb gewährleisten. Außerdem entlasten die Stützen 24 die Räder 25 des Trailers 1. Der Trailer 1 kann auch so ausgestaltet werden, dass er für den Duschbetrieb absenkbar ist. Hierdurch kann die Zahl oder Höhe der Treppenstufen 10, 12 verringert werden.

Der Trailer 1 ist an seiner rechten Außenseite 9 mit einer rechten Klappe 13 und an seiner linken Außenseite 10 mit einer linken Klappe 14 versehen. Die Klappen 13, 14 erstrecken sich in Fahrtrichtung 4 über die gesamte Länge der Zugänge 7, 8 aller Duschkabinen 2, 3 und in vertikaler Richtung über die gesamte Höhe der Duschkabinen 2, 3. Mittels der Klappen 13, 14 werden die Außenseiten 9, 10 des Trailers 1 im Fahrbetrieb fest verschlossen. Im Duschbetrieb können die Klappen 13, 14 hochgeklappt werden, um die Zugänge 7, 8 zu den Duschkabinen 2, 3 freizugeben. Die Klappen 13, 14 können im Duschbetrieb in horizontaler Lage fixiert werden, so dass sie jeweils ein Vordach über dem Zugangsbereich vor den Duschkabinen 2, 3 bilden.

Des Weiteren ist eine Heckklappe 21 vorgesehen, die sich über die gesamte Heckfläche des Trailers 1 erstreckt und entsprechend den seitlichen Klappen 13, 14 aufgeklappt und in horizontaler Lage verriegelt werden kann. Im Bereich der Heckklappe 21 können Wasserinstallationen und Elektroinstallationen für den Betrieb des Trailers 1 untergebracht werden.

Im Inneren des Trailers 1 sind alle Wasserinstallationen wie Trinkwasserleitungen 15 und Ablaufrinnen16 in der Mitte 17 des Trailers angeordnet. Auf diese Weise können alle Duschkabinen 2, 3 über die gesamte Länge des Trailers 1 mit Frischwasser zum Duschen versorgt werden. Entsprechendes gilt für die Ablaufrinnen16 in der Mitte 17 des Trailers 1, in denen sämtliche Abwässer der Duschkabine 2, 3 abgeführt werden können. Durch ein Gefälle in den Duschwannen wird das Abwasser in die mittig gelegene Ablaufrinne 16, die mit einem Gefälle versehen ist, eingeleitet und zu einem zentralen Ablaufpunkt geleitet, der an das öffentliche Kanalsystem angeschlossen werden kann.

Wenn kein warmes Frischwasser für die Duschen zur Verfügung steht, kann der Trailer 1 auch mit einer Ölheizung für die Warmwasserbereitung ausgestattet werden.

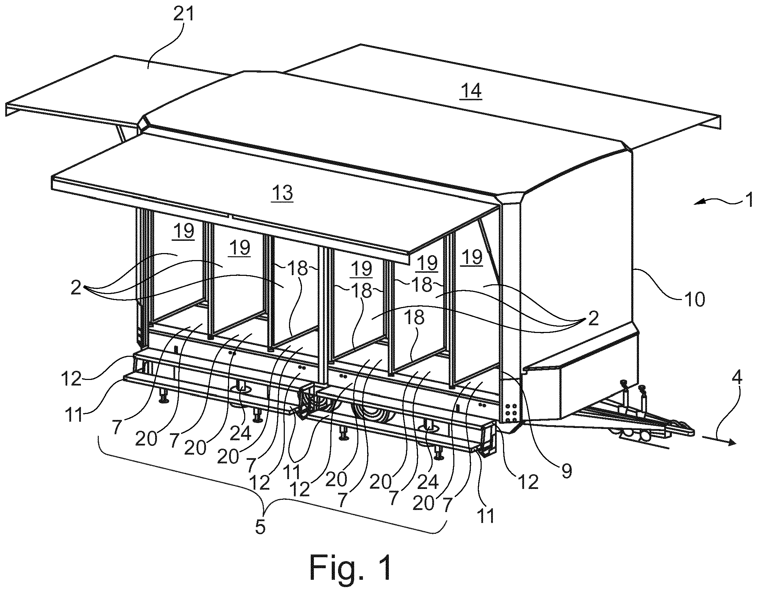

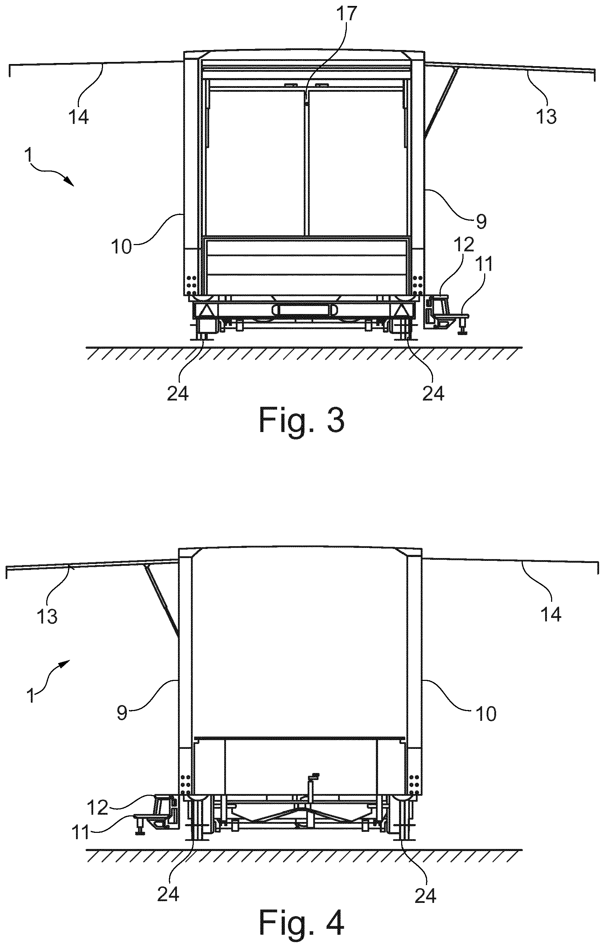

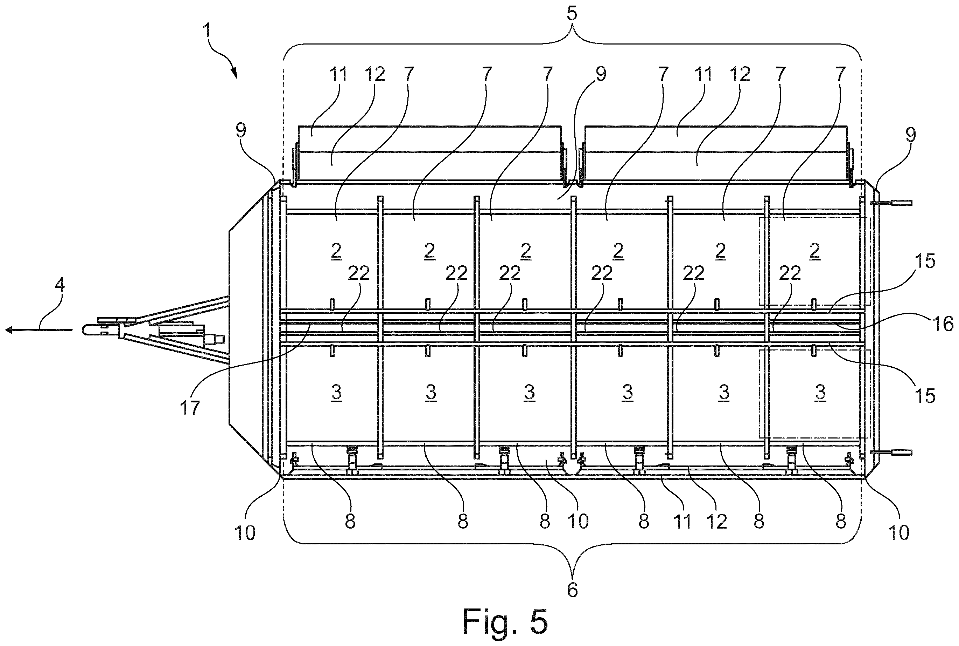

Der in den Figuren 1-5 dargestellte Trailer 1 besitzt insgesamt zwölf Duschkabinen 2, 3 und ist mit dieser Auslegung eher für kleinere Veranstaltungen geeignet. Die Erfindung umfasst aber jede im Rahmen der gesetzlich vorgeschriebenen maximalen Abmessungen von Trailern, die am Straßenverkehr teilnehmen, mögliche Anzahl von Duschkabinen. Insbesondere kann ein für Großveranstaltungen bestimmter erfindungsgemäßer Trailer statt der hier beschriebenen Länge von etwa 5 m und 2 x 6 Duschkabinen 2, 3 eine Gesamtlänge von etwa 10 m mit 2 × 12 Duschkabinen aufweisen.

Der erfindungsgemäße Trailer 1 ist besonders leicht gebaut, wenn wie im vorliegenden Ausführungsbeispiel die Duschkabinen 2, 3 aus Quadratrohren 18 bestehen, die Wände 19 aus Kunststoff zur Abgrenzung der Duschkabinen 2, 3 halten. Außerdem sind die Böden 20 der Duschkabinen 2, 3 aus geriffeltem Aluminiumblech gefertigt. Dieses Material ist leicht, lässt sich problemlos reinigen und gewährleistet außerdem Rutschfestigkeit beim Duschen.

### Bezugszeichen

- 1: Trailer
- 2: rechte Duschkabine
- 3: linke Duschkabine
- 4: Fahrtrichtung
- 5: rechte Reihe
- 6: linke Reihe
- 7: rechter Zugang
- 8: linker Zugang
- 9: rechte Außenseite
- 10: linke Außenseite
- 11: Treppenstufe
- 12: Treppenstufe
- 13: rechte Klappe
- 14: linke Klappe
- 15: Trinkwasserleitungen
- 16: Ablaufrinne
- 17: Mitte
- 18: Quadratrohre
- 19: Wände
- 20: Boden
- 21: Heckklappe
- 22: Innenwände
- 24: Stützen
- 25: Räder

## Patentansprüche

1. Trailer mit Duschkabinen (2, 3), **wobei** zwei in Fahrtrichtung (4) des Trailers (1) ausgerichtete Reihen (5, 6) von Duschkabinen (2, 3) aneinander angrenzend angeordnet sind und wobei für die Duschkabinen (2, 3) ein Zugang (7, 8) von einer Außenseite (9, 10) des Trailers (1) vorhanden ist, **dadurch gekennzeichnet, dass** der Trailer (1) an seinen Außenseiten (9, 10) Klappen (13, 14) zum Verschließen der Außenseiten (9, 10) aufweist, die im aufgeklappten Zustand jeweils ein Vordach bilden.

2. Trailer nach Anspruch 1, **dadurch gekennzeichnet, dass** er an seinen Außenseiten (9, 10) mit ein oder zwei ausklappbaren Treppenstufen (11, 12) versehen ist.

3. Trailer nach Anspruch 2, **dadurch gekennzeichnet, dass** der Trailer (1) für den Duschbetrieb absenkbar ist.

4. Trailer nach einem der vorhergehenden Ansprüche, **dadurch gekennzeichnet, dass** alle Wasserinstallationen, wie Trinkwasserleitungen (15) und Ablaufrinne (16) in der Mitte (17) des Trailers (1) angeordnet sind.

5. Trailer nach einem der vorhergehenden Ansprüche, **dadurch gekennzeichnet, dass** er mit einer Ölheizung für die Warmwasserbereitung versehen ist.

6. Trailer nach einem der vorhergehenden Ansprüche, **dadurch gekennzeichnet, dass** er bei einer Gesamtlänge von etwa 5 m zweimal sechs Duschkabinen (2, 3) oder bei einer Gesamtlänge von etwa 10 m zweimal zwölf Duschkabinen (2, 3) aufweist.

7. Trailer nach einem der vorhergehenden Ansprüche, **dadurch gekennzeichnet, dass** die Duschkabinen (2, 3) aus Rohren (18) bestehen, die Wände (19) zur Abgrenzung der Duschkabinen (2, 3) halten.

8. Trailer nach einem der vorhergehenden Ansprüche, **dadurch gekennzeichnet, dass** der Boden (20) der Duschkabinen (2, 3) aus geriffeltem Aluminiumblech besteht.

## Claims

1. Trailer with shower cabins (2, 3), wherein two rows (5, 6) of shower cabins (2, 3) aligned in the direction of travel (4) of the trailer (1) are arranged adjacent to one another and wherein an access (7, 8) for the shower cabins (2, 3) is provided from an outer side (9, 10) of the trailer (1), **characterized in that** the trailer (1) has flaps (13, 14) on its outer sides (9, 10) for closing the outer sides (9, 10), which in the opened state each form a canopy.

2. Trailer according to claim 1, **characterized in that** it is provided on its outer sides (9, 10) with one or two fold-out steps (11, 12).

3. Trailer according to claim 2, **characterized in that** the trailer (1) can be lowered for shower operation.

4. Trailer according to any of the previous claims, **characterized in that** all water installations, such as drinking water pipes (15) and drain channel (16) are arranged in the middle (17) of the trailer (1).

5. Trailer according to one of the preceding claims, **characterized in that** it is provided with an oil heating system for hot water preparation.

6. Trailer according to one of the preceding claims, **characterized in that** it has twice six shower cabins (2, 3) for a total length of approximately 5 m or twice twelve shower cabins (2, 3) for a total length of approximately 10 m.

7. Trailer according to one of the preceding claims, **characterized in that** the shower cabins (2, 3) consist of tubes (18) which support walls (19) for delimiting the shower cabins (2, 3).

8. Trailer according to one of the preceding claims, **characterized in that** the floor (20) of the shower cabins (2, 3) is made of corrugated aluminum sheet.

## Revendications

1. Remorque avec des cabines de douche (2, 3), dans laquelle deux rangées (5, 6) orientées dans le sens de la marche (4) de la remorque (1) de cabines de douche (2, 3) sont agencées de manière contiguë l'une à l'autre et dans laquelle pour les cabines de douche (2, 3) un accès (7, 8) est présent depuis un côté extérieur (9, 10) de la remorque (1),
**caractérisée en ce que** la remorque (1) présente au niveau de ses côtés extérieurs (9, 10) des clapets (13, 14) pour la fermeture des côtés extérieurs (9, 10) qui forment dans l'état rabattu respectivement un auvent.

2. Remorque selon la revendication 1, **caractérisée en ce qu'**elle est pourvue au niveau de ses côtés extérieurs (9, 10) d'une ou de deux marches d'escalier (11, 12) déployables.

3. Remorque selon la revendication 2, **caractérisée en ce que** la remorque (1) est abaissable pour le mode douche.

4. Remorque selon l'une des revendications précédentes, **caractérisée en ce que** toutes les installations d'eau telles que des conduites d'eau potable (15) et une rigole d'écoulement (16) sont agencées au milieu (17) de la remorque (1).

5. Remorque selon l'une des revendications précédentes, **caractérisée en ce qu'**elle est pourvue d'un chauffage au fioul pour la préparation d'eau chaude.

6. Remorque selon l'une des revendications précédentes, **caractérisée en ce qu'**elle présente pour une longueur globale d'environ 5 m deux fois six cabines de douche (2, 3) ou pour une longueur globale d'environ 10 m deux fois douze cabines de douche (2, 3).

7. Remorque selon l'une des revendications précédentes, **caractérisée en ce que** les cabines de douche (2, 3) se composent de tubes (18) qui maintiennent des parois (19) pour la délimitation des cabines de douche (2, 3).

8. Remorque selon l'une des revendications précédentes, **caractérisée en ce que** le sol (20) des cabines de douche (2, 3) se compose de tôle d'aluminium ondulée.
